# EUROPÄISCHE PATENTSCHRIFT

(11) **EP 0 857 905 B1**
(45) Veröffentlichungstag und Bekanntmachung des Hinweises auf die Patenterteilung: **12.09.2001**
(21) Anmeldenummer: 97121278.2
(22) Anmeldetag: 04.12.1997
(51) Int. Cl.: F16L 11/15

(54) **Flexible Gasleitung**
Flexible gas conduit
Conduite flexible de gaz

(30) Priorität: 05.02.1997 DE 19704227
(43) Veröffentlichungstag der Anmeldung: 12.08.1998
(73) Patentinhaber: Witzenmann GmbH Metallschlauch-Fabrik Pforzheim, 75175 Pforzheim (DE)
(72) Erfinder: Dörge, Franz, D-75210 Keltern-Weiler (DE); Merkowski, Eduard, D-75181 Pforzheim (DE); Nestler, Rüdiger, D-75181 Pforzheim (DE); Pfitzenmeier, Gerd, D-75015 Bretten (DE)
(74) Vertreter: Blumenröhr, Dietrich

(56) Entgegenhaltungen:
- DE-A- 4 446 001
- US-A- 2 300 547
- US-A- 5 172 477

## Beschreibung

Die vorliegende Erfindung geht aus von einer flexiblen Gasleitung, die aus einem gasdichten, mit wenigstens einem axialen Ende an einem Anschlussteil festgelegten Metallwellschlauch besteht sowie aus einem den Wellschlauch unmittelbar umgebenden, ebenfalls an dem Anschlussteil endständig festgelegten Geflechtsschlauch aus Metalldrähten, wobei die Festlegungsposition des Geflechtsschlauches am Anschlussteil von derjenigen des Wellschlauches axial beabstandet ist .

Derartige Gasleitungen werden insbesondere als flexible Zwischenstücke für die Verbindung zwischen Hausgas-Wandanschlüssen und Gasverbrauchseinrichtungen eingesetzt und ermöglichen hierbei ein schnelles und problemloses Anschließen, indem sie etwaige Montagedifferenzen an den Anschlussstellen ausgleichen. Außerdem sind sie in der Lage, Wärmespannungen und Dehnungen benachbarter Leitungsteile abzufangen, die sonst bei einer starren Rohrleitungsverbindung zu unzulässig hohen Spannungen und damit zu Undichtheiten führen könnten.

Hierbei erfolgt die Verbindung des Metallwellschlauches sowie des Geflechtsschlauches der Gasleitung mit dem Anschlussteil in der Regel dadurch, daß auf das Anschlussteil im Bereich der Überlappung mit dem Wellschlauch und dem Geflecht eine Endhülse aufgesteckt und mit dem Anschlußteil unter Einbindung von Wellschlauch und Geflecht verschweißt wird. Neben den hierbei verwendeten WIG- und MAG-Schweißungen ist es darüberhinaus auch bekannt, all diese Komponenten miteinander zu verlöten. Dem Löten wie auch dem Verschweißen unter Einbeziehung von einem den Geflechtsschlauch umgebenden Endring ist jedoch gemeinsam, daß diese Verbindungsverfahren für die hier vorliegende Anwendung aufwendig und teuer sind, da insgesamt vier Komponenten aufeinander abgestimmt und gegeneinander festgelegt werden müssen, wobei die verwendeten ring- oder insbesondere schraubengangförmig gewellten Schläuche sowie die Drahtgeflechte im Hinblick auf Schweißverbindungen ohnehin problematisch in der Handhabung sind.

In diesem Zusammenhang sei auch beispielhaft auf die US-A 5 172 477 verwiesen, bei der der Wellschlauch mit einem ersten Flansch des Anschlussteils unter Einbindung einer den Wellschlauch umgebenden Hülse verschweißt ist und bei der der Geflechtsschlauch unter einer ihn umgebenden zweiten Hülse mit einem zweiten Flansch des Anschlussteils verschweißt ist. In ähnlicher Weise erfolgt der Anschluss bei der US-A 2 300 547, bei der anstelle zweier Hülsen ein den Geflechtsschlauch umgebender Endring vorgesehen ist.

Hiervon ausgehend liegt der vorliegenden Erfindung die Aufgabe zugrunde, eine vereinfachte Art der Verbindung zwischen der flexiblen Gasleitung und dem Anschlussteil zur Verfügung zu stellen, die sich sowohl in wirtschaftlicher als auch in handhabungstechnischer Hinsicht auszeichnet.

Diese Aufgabe wird für eine flexible Gasleitung der eingangs geschilderten Art gelöst, durch die Merkmale in Anspruch 1.

Durch das Aufsplitten der Verbindung von Gasleitung und Anschlussteil auf zwei separate Festlegungspositionen ergibt sich zunächst einmal der Vorteil, daß jeweils nur zwei Komponenten in einer Festlegungsposition verbunden werden müssen, wodurch die Art der Verbindung jeweils an die besonderen Anbindungsgegebenheiten angepaßt werden kann. Durch den axialen Abstand zwischen den beiden Festlegungspositionen wird sichergestellt, daß bei einem zeitlich versetzten Anbinden die zuerst hergestellte Verbindung nicht durch das Festlegungsverfahren der zweiten Verbindung beeinträchtigt bzw. wieder verschlechtert wird.

Da in der Regel die Festlegungsposition des Geflechtsschlauches außerhalb des Längenbereichs des Wellschlauches angeordnet ist, so daß der Geflechtsschlauch den Wellschlauch auch im Bereich dessen Festlegungsposition überdeckt, wird zuerst der Wellschlauch mit dem Anschlußteil verbunden und erst anschließend der Geflechtsschlauch an das Anschlußteil angeschweißt. Durch den axialen Abstand zwischen den beiden Festlegungspositionen kann demnach die beim Verschweißen auf das Anschlußteil übertrage Wärme von der Verbindungsstelle des Wellschlauches mit dem Anschlußteil ferngehalten werden.

Indem der Geflechtsschlauch, der zur Aufnahme der von außen auf die Gasleitung einwirkenden Kräfte dient, die Festlegungsposition des Wellschlauches überdeckt, wird darüber hinaus sichergestellt, daß diese nicht von einer solchen äußeren Krafteinwirkung beansprucht wird, die die Qualität der gasdichten Verbindung zwischen Wellschlauch und Anschlußteil beeinträchtigen würde. Demnach kann man bei der Festlegung des Wellschlauches sich auf die Gasdichtheit konzentrieren und muß die Art der Verbindung nicht für die Aufnahme größerer Kräfte auslegen. Ebenso muß auch die Art der Verschweißung des Geflechtsschlauches nur das Kriterium der mechanischen Belastbarkeit erfüllen, ohne daß hierdurch eine gasdichte Anbindung hergestellt werden müßte.

in diesem Zusammenhang liegt ein weiterer Vorteil der vorliegenden Erfindung darin, daß zuerst der Wellschlauch am Anschlußteil festgelegt und in diesem Zwischenzustand die Gasleitung auf Dichtheit überprüft werden kann, woraufhin erst nach Feststellung einer ausreichenden Dichtheit der Geflechtsschlauch über den Wellschlauch, dessen Verbindung mit dem Anschlußteil sowie über Teile des Anschlußteiles gelegt und dort angebunden wird. Eine Dichtheitsprüfung alleine des Wellschlauches läßt eine etwaige Undichtigkeit direkt erkennen, während beim Stand der Technik erst die gesamte Gasleitung einem derartigen Test unterzogen werden kann und hierbei das den Wellschlauch umgebende Geflecht ein Überprüfen behindert und auch undichte Stellen nicht direkt erkennen läßt.

Nicht zuletzt liegt ein Vorteil der Erfindung darin, daß auf einen zusätzlichen, auf das Geflecht aufzusteckenden Endring verzichtet werden kann, da dieser lediglich dazu diente, das für das Verschweißen erforderliche Zusatzmaterial zur Verfügung zu stellen. Da durch das Auftrennen der Festlegungspositionen nun ein Schweißverfahren anwendbar ist, das ohne Zusatzwerkstoff auskommt und das Geflecht direkt am Anschlußteil festlegt, kann der Endring ersatzlos weggelassen werden, was nicht nur eine Reduzierung des Material-, sondern auch des Verarbeitungsaufwandes bedeutet.

Somit muß auf dem Geflechtsschlauch kein zusätzliches Material mehr aufgebracht werden, was in Verbindung mit dem im Bereich der Geflechtsschlauchfestlegungsposition einen dem Wellschlauch entsprechenden Außendurchmesser aufweisenden Außenteil dazu führt, daß sich ein durchgehend gleicher Außendurchmesser des Geflechtsschlauchs bis hin zu dessen Festlegungsposition ergibt. Ein üblicherweise auf dem Geflechtsschlauch aufgezogener Kunststoffmantel kann hierdurch wiederum ohne Durchmesseränderungen glattwandig verlaufen.

Was die Schweißverbindung des Geflechtsschlauches mit dem Anschlußteil betrifft, so ist diese vorteilhafterweise durch Laserstrahl-Schweißen hergestellt. Hierbei kann auf einen Zusatzwerkstoff verzichtet und der Geflechtsschlauch in zuverlässiger Weise durch eine Lasersteppnaht am Anschlußteil festgelegt werden. Darüber hinaus ist es in ähnlicher Weise möglich, die Schweißverbindung durch elektrisches Widerstandsschweißen herzustellen und als Rollnaht auszubilden. In beiden Fällen besteht die Schweißverbindung zwischen Geflechtsschlauch und Anschlußteil zweckmäßigerweise aus einer Vielzahl von über den gesamten Umfang des Geflechts verteilt angeordneten Schweißstellen, wobei unter Umständen auch zwei Laserstepp- bzw. Rollnähte zur besseren Anbindung nebeneinander angeordnet sein können.

Ein weiterer Aspekt der vorliegenden Erfindung kommt dann zum Tragen, wenn das Anschlußteil neben der Festlegungsposition des Geflechtsschlauches und außerhalb dessen Längenbereiches einen zumindest ungefähr radial verlaufenden Absatz und einen sich hieran anschließenden Bereich mit reduziertem Außendurchmesser aufweist. Hierdurch kann der Geflechtsschlauch bündig mit dem Absatz abgetrennt werden, indem die Absatzkante gleichzeitig als Abtrennkante für das jeweilige Abtrennverfahren fungiert. Somit läßt sich eine saubere Verarbeitung und Längenbegrenzung des Geflechtsschlauches herstellen, was dadurch noch verbessert wird, daß die Festlegungsposition des Geflechtsschlauches zur Vermeidung loser Geflechtsdrähte nahe an der Absatzkante angeordnet ist.

Neben einem Abtrennen des Geflechtsschlauches durch herkömmliche mechanische Verfahren kann die Abtrennung in vorteilhafter Weise auch durch Laserstrahlschneiden hergestellt sein, so daß sowohl die Schweißverbindung als auch die Abtrennung durch ein und dieselbe Laserschweißeinrichtung und noch dazu in einer Aufspannung gebildet werden können.

Unabhängig von der Art des Schweiß- und Abtrennverfahrens empfiehlt es sich, den Anschlußteilbereich der Festlegungsposition des Geflechtsschlauches zylindrisch auszuführen, um der Schweißverbindung einen ausreichend großen Abschnitt gleichen Durchmessers und somit gleicher Anbindungseigenschaften zur Verfügung zu stellen.

Schließlich erfolgt das Festlegen des Wellschlauches am Anschlußteil zweckmäßigerweise durch eine Schweiß- oder Lötverbindung, wobei lediglich sichergestellt werden muß, daß ein gasdichter Übergang zwischen Wellschlauch und Anschlußteil erzeugt wird.

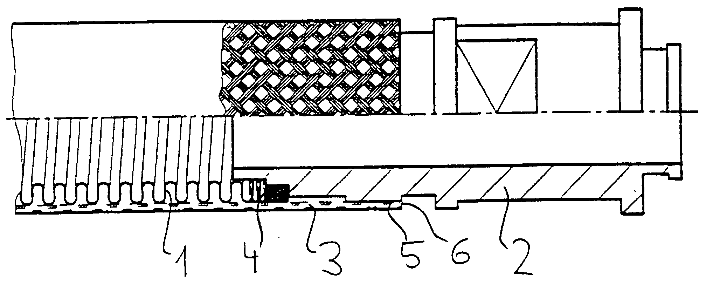

Weitere Merkmale und Vorteile der Erfindung ergeben sich aus der nachfolgenden Beschreibung eines Ausführungsbeispiels anhand der Zeichnung; sie zeigt eine Seitenansicht mit teilweisem Axialschnitt der Anbindung eines Anschlußteiles an eine flexible Gasleitung.

Hierbei ist ein Wendelwellschlauch 1 an seinem axialen Ende an ein metallisches Anschlußteil 2 gelötet, wobei hierzu das Schlauchende zuvor etwas gestaucht wird, um eine ebene Anbindungsfläche zu erzielen.

Der Wellschlauch 1 ist auf seiner Außenseite unmittelbar von einem Geflechtsschlauch 3 aus Metalldrähten umgeben, der zur Aufnahme der auf die Gasleitung übertragenen Kräfte dient, um diese vom gasbeaufschlagten Wellschlauch fernzuhalten. Das Geflecht überdeckt nicht nur den Wellschlauch im Bereich seiner Erstreckung außerhalb des Anschlußteils, sondern auch im Bereich seiner Festlegungsposition 4 am Anschlußteil 2 und ist selbst in einer Festlegungsposition 5 am Anschlußteil durch Schweißen festgelegt, wobei die Festlegungspositionen 4 und 5 axial voneinander beabstandet sind.

Im Bereich der Festlegungsposition 5 weist das Anschlußteil 2 einen Außendurchmesser auf, der dem Außendurchmesser des Wellschlauches entspricht, so daß der Geflechtsschlauch stufenlos und ohne Durchmesseränderungen verlaufen kann.

Direkt neben der Festlegungsposition 5 des Geflechtsschlauches 3 weist das Anschlußteil 2 einen Absatz 6 mit sich hieran anschließendem Bereich reduzierten Durchmessers auf, wobei die hierbei entstehende Absatzkante dazu dient, den Geflechtsschlauch 5 sauber abzutrennen. Wie vorstehend bereits erwähnt, kann das Abtrennen durch Laserschneiden erfolgen, insbesondere wenn auch die Schweißverbindung zwischen Geflechtsschlauch und Anschlußteil aus einer Lasersteppnaht besteht.

Zusammenfassend liegen die Vorteile der vorliegenden Erfindung darin, daß unter Verzicht auf einen Zusatzwerkstoff, insbesondere einen separaten Endring eine vereinfachte Schweißverbindung zwischen Geflechtsschlauch und Anschlußteil zur Verfügung gestellt wird, die durch den axialen Abstand von der Festlegungsposition des Wellschlauches am Anschlußteil ohne Einfluß auf die Qualität dieser Festlegung ist und darüberhinaus ein Auftrennen der Verbindungsfunktionen ermöglicht, und zwar in eine gasdichte Anbindung des Wellschlauchs und in eine beanspruchungsfeste Anbindung des Geflechtsschlauches.

## Patentansprüche

1. Flexible Gasleitung, bestehend aus einem gasdichten, mit wenigstens einem axialen Ende an einem Anschlussteil festgelegten Metallwellschlauch und aus einem den Wellschlauch unmittelbar umgebenden, ebenfalls an dem Anschlussteil endständig festgelegen Geflechtsschlauch aus Metalldrähten, wobei die Festlegungsposition (5) des Geflechtsschlauches (3) am Anschlussteil (2) von derjenigen (4) des Wellschlauches (1) axial beabstandet ist,
**dadurch gekennzeichnet,**
**dass** das Anschlussteil im Bereich der Festlegungsposition des Geflechtsschlauches einen dem Außendurchmesser des Wellschlauches entsprechenden Außendurchmesser aufweist, und dass das Festlegen des Geflechtsschlauches am Anschlussteil unter Verzicht auf einen zusätzlichen, auf das Geflecht aufzusteckenden Endring durch eine lediglich Geflechtsschlauch und Anschlussteil festlegende Schweißverbindung erfolgt.

2. Flexible Gasleitung nach Anspruch 1
**dadurch gekennzeichnet,**
**dass** die Festlegungsposition (5) des Geflechtsschlauches außerhalb des Längenbereichs des Wellschlauches (1) angeordnet ist, so dass der Geflechtsschlauch den Wellschlauch auch im Bereich dessen Festlegungsposition (4) überdeckt.

3. Flexible Gasleitung nach zumindest einem der vorstehenden Ansprüche,
**dadurch gekennzeichnet,**
**daß** die Schweißverbindung des Geflechtsschlauches (3) mit dem Anschlußteil (2) durch Laserstrahlschweißen hergestellt ist.

4. Flexible Gasleitung nach zumindest einem der vorstehenden Ansprüche, **dadurch gekennzeichnet,**
**daß** die Schweißverbindung des Geflechtsschlauches (3) mit dem Anschlußteil (2) durch elektrisches Widerstandsschweißen hergestellt ist.

5. Flexible Gasleitung nach zumindest einem der vorstehenden Ansprüche,
**dadurch gekennzeichnet,**
**daß** die Schweißverbindung des Geflechtsschlauches (3) mit dem Anschlußteil (2) aus einer Vielzahl von über den gesamten Umfang des Geflechtsschlauches verteilt angeordneten Schweißstellen besteht.

6. Flexible Gasleitung nach zumindest einem der vorstehenden Ansprüche,
**dadurch gekennzeichnet,**
**daß** das Anschlußteil (2) im Bereich der Festlegungsposition (5) des Geflechtsschlauches (3) einen zylindrischen Verlauf aufweist.

7. Flexible Gasleitung nach zumindest einem der vorstehenden Ansprüche,
**dadurch gekennzeichnet,**
**daß** das Anschlußteil (2) neben der Festlegungsposition (5) des Geflechtsschlauchs (3) und außerhalb dessen Längenbereichs einen radial verlaufenden Absatz (6) und einen sich hieran anschließenden Bereich mit reduziertem Außendurchmesser aufweist.

8. Flexible Gasleitung nach Anspruch 7,
**dadurch gekennzeichnet,**
**daß** der Geflechtsschlauch (3) bündig mit dem Absatz (6) abgetrennt ist.

9. Flexible Gasleitung nach Anspruch 8,
**dadurch gekennzeichnet,**
**daß** die Abtrennung des Geflechts (3) durch Laserstrahlschneiden hergestellt ist.

10. Flexible Gasleitung nach Anspruch 9 und Anspruch 3,
**dadurch gekennzeichnet,**
**daß** sowohl die Schweißverbindung als auch die Abtrennung durch ein und dieselbe Laserschweißeinrichtung gebildet sind.

11. Flexible Gasleitung nach zumindest einem der vorstehenden Ansprüche,
**dadurch gekennzeichnet,**
**daß** das Festlegen des Wellschlauches (1) am Anschlußteil (2) durch eine Schweiß- oder Lötverbindung erfolgt.

## Claims

1. Flexible gas conduit, consisting of a gas-tight corrugated metal tube, which is secured by at least one axial end to a connection member, and a plaited tube made of metal wires, which immediately surrounds the corrugated tube and is likewise secured by its end to the connection member, the securement position (5) of the plaited tube (3) on the connection member (2) being spaced apart axially from that (4) of the corrugated tube (1),
**characterised in that**
the connection member has, in the region of the securement position of the plaited tube, an outer diameter corresponding to the outer diameter of the corrugated tube, and the securement of the plaited tube on the connection member is effected by means of a welded connection securing solely the plaited tube and the connection member, dispensing with an additional end ring to be placed onto the plait.

2. Flexible gas conduit according to claim 1,
**characterised in that**
the securement position (5) of the plaited tube is arranged outside the linear extent of the corrugated tube (1), so that the plaited tube covers the corrugated tube also in the region of the latter's securement position (4).

3. Flexible gas conduit according to at least one of the preceding claims,
**characterised in that**
the welded connection of the plaited tube (3) to the connection member (2) is effected by means of laser beam welding.

4. Flexible gas conduit according to at least one of the preceding claims,
**characterised in that**
the welded connection of the plaited tube (3) to the connection member (2) is effected by means of electrical resistance welding.

5. Flexible gas conduit according to at least one of the preceding claims,
**characterised in that**
the welded connection of the plaited tube (3) to the connection member (2) consists of a plurality of welds distributed over the entire circumference of the plaited tube.

6. Flexible gas conduit according to at least one of the preceding claims,
**characterised in that**
the connection member (2) is cylindrical in the region of the securement position (5) of the plaited tube (3).

7. Flexible gas conduit according to at least one of the preceding claims,
**characterised in that**
the connection member (2) has, next to the securement position (5) of the plaited tube (3) and outside the linear extent thereof, a radially extending shoulder (6) and an adjoining region of reduced outer diameter.

8. Flexible gas conduit according to claim 7,
**characterised in that**
the plaited tube (3) is severed flush with the shoulder (6).

9. Flexible gas conduit according to claim 8,
**characterised in that**
the severance of the plait (3) is effected by laser beam cutting.

10. Flexible gas conduit according to claim 9 and claim 3,
**characterised in that**
both the welded connection and the severance are effected by the same laser welding device.

11. Flexible gas conduit according to at least one of the preceding claims,
**characterised in that**
the securement of the corrugated tube (1) on the connection member (2) is effected by a welded or soldered connection.

## Revendications

1. Conduite flexible de gaz, composée d'un tuyau onduleux flexible métallique étanche aux gaz, fixé à une pièce de raccordement par au moins une extrémité axiale, et d'une gaine tressée en fils métalliques, gainant directement le tuyau onduleux flexible et fixée également à la pièce de raccordement par une extrémité, la position de fixation (5) de la gaine tressée (3) sur la pièce de raccordement (2) étant à distance axiale de celle (4) du tuyau onduleux flexible (1), **caractérisée en ce que** la pièce de raccordement présente, dans la partie de la position de fixation de la gaine tressée, un diamètre extérieur correspondant au diamètre extérieur du tuyau onduleux flexible, et en ce que la fixation de la gaine tressée à la pièce de raccordement est réalisée, en renonçant à un anneau terminal supplémentaire à monter sur la gaine, en fixant par une simple soudure la gaine tressée et la pièce de raccordement.

2. Conduite flexible de gaz selon la revendication 1, **caractérisée en ce que** la position de fixation (5) de la gaine tressée est placée à l'extérieur de la partie longitudinale du tuyau onduleux flexible (1) de sorte que la gaine tressée recouvre le tuyau onduleux flexible aussi dans la partie de sa position de fixation (4).

3. Conduite flexible de gaz selon au moins l'une des revendications précédentes, **caractérisée en ce que** la soudure de la gaine tressée (3) à la pièce de raccordement (2) est réalisée par soudure au laser.

4. Conduite flexible de gaz selon au moins l'une des revendications précédentes, **caractérisée en ce que** la soudure de la gaine tressée (3) à la pièce de raccordement (2) est réalisée par soudage par résistance électrique.

5. Conduite flexible de gaz selon au moins l'une des revendications précédentes, **caractérisée en ce que** la soudure de la gaine tressée (3) à la pièce de raccordement (2) est composée de nombreux points de soudure répartis sur tout le pourtour de la gaine tressée.

6. Conduite flexible de gaz selon au moins l'une des revendications précédentes, **caractérisée en ce que** la pièce de raccordement (2) présente un tracé cylindrique dans la partie de la position de fixation (5) de la gaine tressée (3).

7. Conduite flexible de gaz selon au moins l'une des revendications précédentes, **caractérisée en ce que** la pièce de raccordement (2) présente un gradin (6) radial et une partie de diamètre extérieur réduit s'y raccordant, à côté de la position de fixation (5) de la gaine tressée (3) et à l'extérieur de sa partie longitudinale.

8. Conduite flexible de gaz selon la revendication 7, **caractérisée en ce que** la gaine tressée (3) est séparée à fleur du gradin (6).

9. Conduite flexible de gaz selon la revendication 8, **caractérisée en ce que** la séparation de la gaine (3) est réalisée par découpage au laser.

10. Conduite flexible de gaz selon la revendication 9 et la revendication 3, **caractérisée en ce que** la soudure ainsi que la séparation sont formées par un même dispositif de soudure à laser.

11. Conduite flexible de gaz selon au moins l'une des revendications précédentes, **caractérisée en ce que** la fixation du tuyau onduleux flexible (1) à la pièce de raccordement (2) est réalisée par soudure ou brasage.
